# EUROPÄISCHE PATENTSCHRIFT

(11) **EP 3 040 701 B1**
(45) Veröffentlichungstag und Bekanntmachung des Hinweises auf die Patenterteilung: **28.02.2018**
(21) Anmeldenummer: 15197779.0
(22) Anmeldetag: 03.12.2015
(51) Int. Cl.: F03D 1/06, F03D 17/00, G01M 5/00

(54) **VERFAHREN ZUR ÜBERWACHUNG ODER ÜBERPRÜFUNG DER SCHRAUBBOLZENVORSPANNUNG AN DYNAMISCH BEANSPRUCHTEN SCHRAUBVERBINDUNGEN**
METHOD FOR MONITORING OR CHECKING THE SCREW BOLT PRETENSION AT DYNAMICALLY STRESSED SCREWED CONNECTIONS
PROCEDE DE SURVEILLANCE OU DE VERIFICATION DE LA PRECONTRAINTE DE BOULON FILETE SUR DES ASSEMBLAGES PAR VIS SOUMIS A DES SOLLICITATIONS DYNAMIQUES

(30) Priorität: 12.12.2014 DE 102014118516
(43) Veröffentlichungstag der Anmeldung: 06.07.2016
(73) Patentinhaber: innogy SE, 45128 Essen (DE)
(72) Erfinder: DAUM, Karlheinz, 67133 Maxdorf (DE)
(74) Vertreter: Kierdorf Ritschel Richly

(56) Entgegenhaltungen:
- JP-B2- 3 361 171
- US-A1- 2011 158 806

## Beschreibung

Die Erfindung betrifft ein Verfahren zur Überwachung oder Überprüfung der Schraubbolzenvorspannung an dynamisch beanspruchten Schraubverbindungen.

Die Erfindung betrifft insbesondere ein Verfahren zur eingriffslosen Überwachung oder Überprüfung der Schraubbolzen-Vorspannung an Schraubverbindungen an einer Rotornabe, vorzugsweise an Schraubverbindungen an einer Rotornabe eines Windkraftgenerators.

Unter einem eingriffslosen Verfahren im Sinne der vorliegenden Erfindung ist ein Verfahren zur Überwachung oder Überprüfung der Schraubbolzen-Vorspannung ohne Eingriff mit einem Werkzeug zu verstehen, welches die einmal aufgebrachte Schraubbolzen-Vorspannung verändern würde.

Üblicherweise werden beispielsweise an Rotornaben von Windkraftgeneratoren Rotorflügel über Schraubverbindungen gesichert. Hierzu sind an der Rotornabe entsprechend der Anzahl der an der Rotornabe zu sichernden Rotorflügel Befestigungsflansche mit Lochkränzen vorgesehen. An den Rotorflügeln sind entsprechende Befestigungsflansche vorgesehen, die Stehbolzen als Schraubbolzen aufweisen. Die Stehbolzen durchsetzen Befestigungsbohrungen der entsprechenden Lochkränze der Rotornabe und sind mittels Muttern gesichert. Die Schraubbolzen bzw. sind in der Regel als sogenannte Dehnbolzen ausgebildet.

Dehnbolzen im Allgemeinen und im Sinne der Erfindung umfassen einen Schaft, der einen gewindelosen zylindrischen Abschnitt und einen Gewindeabschnitt aufweist. Der gewindelose zylindrische Abschnitt besitzt im Allgemeinen einen geringeren Durchmesser als der Gewindeschaft des Dehnbolzens, wobei die elastische Verformbarkeit des gewindelosen Schaftabschnitts die maximale Vorspannkraft des Dehnbolzens bestimmt.

Bei dynamisch beanspruchten Schraubverbindungen ergibt sich darüber hinaus eine Überlagerung der Vorspannkraft und der Betriebslast, die je nach Montagevorspannkraft, die beim Anziehen der Mutter aufgebracht wird, dazu führen kann, dass die Schraubverbindung je nach Überlagerungsfall Vorspannkraft verlieren kann, was unweigerlich zum Lösen der Schraubverbindung führen würde. Insbesondere bei Windkraftgeneratoren kann das zu einem unkalkulierbaren Sicherheitsrisiko führen.

Bei solchen Schraubbolzen, wie sie der Montage von Rotorblättern an Windkraftanlagen verwendet werden, kann bereits eine Viertel Umdrehung der Mutter der Schraubenverbindung darüber entscheiden, ob die vorgesehene Vorspannkraft der Schraubverbindung erreicht ist. Darüber hinaus spielen dabei auch Materialtoleranzen eine Rolle.

Stand der Technik ist aus US20110158806 und JP07253368 bekannt. Der Erfindung liegt daher die Aufgabe zugrunde, ein verhältnismäßig einfaches Verfahren zur Überwachung oder zur Überprüfung der Schraubbolzen-Vorspannung an dynamisch hoch beanspruchten Schraubverbindungen bereitzustellen, mit dem sichergestellt ist, dass stets eine ausreichende Sicherung der Schraubverbindung im Sinne einer hinreichenden Schraubbolzen-Vorspannung gewährleistet ist.

Die Aufgabe wird gelöst durch ein Verfahren mit den Merkmalen des Anspruchs 1. Vorteilhafte Ausgestaltungen ergeben sich aus den Unteransprüchen.

Nach einem Gesichtspunkt der Erfindung ist ein Verfahren zur Überwachung oder Überprüfung der Schraubbolzen-Vorspannung an dynamisch beanspruchten Schraubverbindungen vorgesehen, das sich dadurch auszeichnet, dass die Länge wenigstens eines Schraubbolzens in der Einbaulage unter axialer Vorspannung mittels einer Ultraschallvermessung unter Zuhilfenahme eines Ultraschallmessgeräts erfasst wird und dann mit einer Solllänge des Schraubbolzens verglichen wird.

Das Verfahren gemäß der Erfindung kann sowohl kontinuierlich im Sinne einer dauerhaften Überwachung als auch periodisch im Sinne einer Überprüfung von Zeit zu Zeit durchgeführt werden.

Vorzugsweise wird das Verfahren zur Überwachung oder Überprüfung der Schraubbolzen-Vorspannung an Schraubverbindungen an einer Rotornabe eines Windkraftgenerators durchgeführt.

Das Verfahren ist vorzugsweise eingriffslos, das heißt, dass die Messung ohne Eingriff in die Integrität der Schraubverbindung erfolgt, das heißt ohne die üblichen Mittel zur Drehmomentüberprüfung, die jedenfalls ein Lösen oder Anziehen der Schraubverbindung erfordern würden.

Zweckmäßigerweise wird die Solllänge durch Ultraschallvermessung eines Referenz-Schraubbolzens oder des zu überwachenden Schraubbolzens ermittelt.

Als Referenz-Schraubbolzen kann beispielsweise ein Schraubbolzen einer bestimmten Charge an Schraubbolzen dienen, alternativ ist es möglich, jeden der zu überwachenden Schraubbolzen vor Einbau einer erstmaligen Ultraschallvermessung zu unterziehen.

Besonders bevorzugt ist vorgesehen, dass das Ultraschallmessgerät über eine einstellbare Schallgeschwindigkeit des Ultraschalls auf eine Solllänge kalibriert wird, die der Solllänge des Schraubbolzens beziehungsweise der Schraubbolzen im vorgespannten Zustand entspricht. Auf diese Art und Weise kann verhältnismäßig einfach sichergestellt werden, dass das Ultraschallmessgerät eine digitale Überprüfung der korrekten Vorspannung des Schraubbolzens im Sinne einer Ja/Nein-Überprüfung ermöglicht. Mit anderen Worten, wenn der mit Ultraschallgerät ermittelte Messwert für gut befunden wird, entspricht er einer Solllänge des Schraubbolzens im vorgespannten Zustand, wobei mittels der Grundvermessung oder mittels Chargenreferenzwerten das Ultraschallmessgerät über die einzustellende Schallgeschwindigkeit an dem Ultraschallmessgerät auf die entsprechende Länge des Schraubbolzens kalibriert wurde.

Vorzugsweise umfasst das Verfahren weiterhin folgende Verfahrensschritte:
a) Längenmessung der Länge des Referenz-Schraubbolzens oder des betreffenden Schraubbolzens mittels eines Referenzmessgeräts im nicht vorgespannten Zustand,
b) Ultraschallvermessung der Länge des Referenz-Schraubbolzens oder des betreffenden Schraubbolzens in einem nicht vorgespannten Zustand,
c) Ermitteln eines ersten Kalibrierungsfaktors aus den Messungen gemäß der Verfahrensschritte a) und b),
d) Ultraschallvermessung der Länge des Referenz-Schraubbolzens oder des betreffenden Schraubbolzens in einem vorgespannten Zustand und
e) Ermitteln eines zweiten Kalibrierungsfaktors aus den Messungen gemäß den Verfahrensschritten b) und c) unter Berücksichtigung des ersten Kalibrierungsfaktors.

Als Referenzmessmittel im Sinne der vorliegenden Erfindung kann beispielsweise eine herkömmliche Messlehre dienen, mit welcher die Länge des Referenz-Schraubbolzens abgegriffen wird. Danach kann eine Ultraschallvermessung desselben Schraubbolzens durchgeführt werden, wobei dann die Messungen gemäß Verfahrensschritt a) und Verfahrensschritt b) ins Verhältnis gesetzt werden können, woraus sich ein materialspezifischer erster Kalibrierungsfaktor ergibt.

Die Reihenfolge der Schritte a) und b) ist für das Verfahren nicht kritisch. Dieser erste Kalibrierungsfaktor wird zweckmäßigerweise ermittelt, um Toleranzen in Herstellerangaben bezüglich Material und Länge zu egalisieren.

Der zweite Kalibrierungsfaktor wird zweckmäßigerweise zur Voreinstellung des Ultraschallmessgeräts vor einer Überwachungsmessung oder vor einer oder mehreren Überprüfungsmessungen ermittelt, wobei unter der Voreinstellung die Einstellung des Ultraschallmessgeräts über die Schallgeschwindigkeit auf die Soll-Schraubbolzenbolzen-Länge zu verstehen ist, so dass das Messgerät im Sinne eines Soll/Ist-Vergleichs die Längenmessung als gut oder schlecht ausweisen kann. Hierzu wird zweckmäßigerweise ein Proportionalitätsfaktor aus der Ultraschallvermessung des Schraubbolzens im nicht vorgespannten Zustand und im gespannten Zustand ermittelt. Dabei wird die Länge des Referenz-Schraubbolzens oder des betreffenden Schraubbolzens im nicht vorgespannten Zustand korrigiert um den ersten Kalibrierungsfaktor und ins Verhältnis zu dem gemäß Verfahrensschritt d) ermittelten Messwert gesetzt und das Ultraschallgerät wird entsprechend kalibriert.

Die Schallgeschwindigkeit des Ultraschalls aus einer Ultraschallquelle des Ultraschallmessgeräts wird so eingestellt, dass das Ultraschallmessgerät eine entsprechende Messung des Schraubbolzens als gut ausgeben würde.

Bei einem besonders bevorzugten Ausführungsbeispiel ist vorgesehen, dass der Referenz-Schraubbolzen oder der betreffende Schraubbolzen nach dem Verfahrensschritt c) und vor dem Verfahrensschritt d) in einer simulierten Einbaukonfiguration vorgespannt wird. Hierzu kann beispielsweise vorgesehen sein, den Referenz-Schraubbolzen oder den betreffenden Schraubbolzen in eine entsprechend ausgebildete Zugpresse einzusetzen, in der auch die Einspannlänge des oder der Gewindeabschnitte des Schraubbolzens berücksichtigt wird.

Somit ist eine Kontrolle der Dehnung der Schraubbolzen nach dem Vorspannen, aber auch bei bereits eingebautem Schraubbolzen möglich, bei denen es keine Erstvermessung vor dem Einbau gegeben hat.

Der Grund dafür, dass mittels einer Grundvermessung oder Chargenreferenzwerten das Messgerät über die einzustellende Schallgeschwindigkeit auf die entsprechende Länge der Schraubbolzen kalibriert wird, erklärt sich dadurch, dass wegen einer Gefügeveränderung der Schraubbolzen im vorgespannten Zustand grundsätzlich eine Längenmessung der Schraubbolzen im nicht gespannten Zustand nicht auf eine Längenmessung im vorgespannten Zustand skalierbar ist, da sich die Ausbreitungsgeschwindigkeit der Ultraschallwellen im Material durch die Dehnung des Materials und die Wechselwirkung des Materials bzw. des Schraubbolzens mit der Einspannung im Bereich des oder der Gewindeabschnitte verändert.

Bei einer besonderen zweckmäßigen und vorteilhaften Variante der Erfindung ist vorgesehen, dass das Ultraschallmessgerät an dem zu überprüfenden oder zu überwachenden Schraubbolzen verbleibt, so dass ein Messsignal fortlaufend auslesbar ist.

Hierzu kann beispielsweise das Ultraschallmessgerät einen Gerätekörper aufweisen, der als Kappe auf das freie Ende eines Schraubbolzens aufgesetzt werden kann.

Das Messsignal kann induktiv, kabelgebunden oder aber auch per Funk ausgelesen werden und beispielsweise per Datenfernübertragung an eine Messwachte übertragen werden.

Das Ultraschallmessgerät kann eine Ultraschall-Quelle und einen Ulraschall-Empfänger, eine Auswertelogik und einen Signalgeber umfassen.

Die Erfindung wird nachstehend anhand eines in den Zeichnungen dargestellten Ausführungsbeispiels erläutert. Es zeigen:
- Figur 1:: eine Teilansicht eines Rotorblatts 1 eines Windkraftgenerators,
- Figur 2:: einen Schnitt entlang der Linien A-A in Figur 1

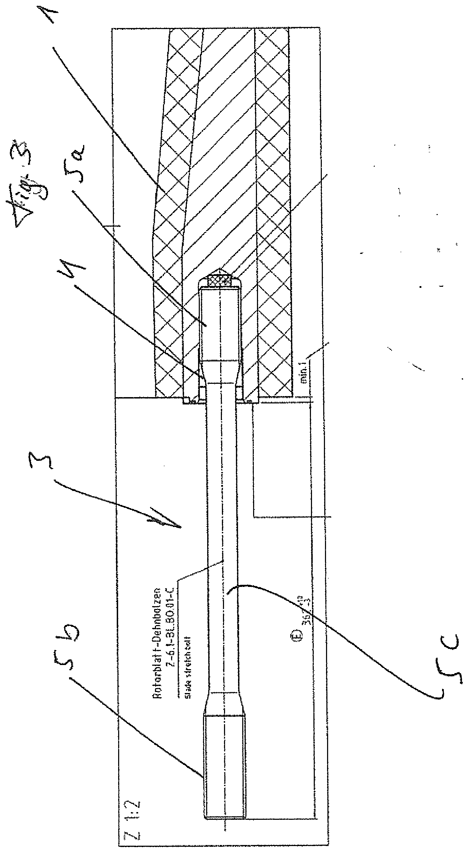

- Figur 3:: eine Detailansicht Z in Figur 2 und
- Figur 4:: eine Teilschnittansicht des Schraubbolzens in der Einbausituation mit montiertem Rotorblatt.

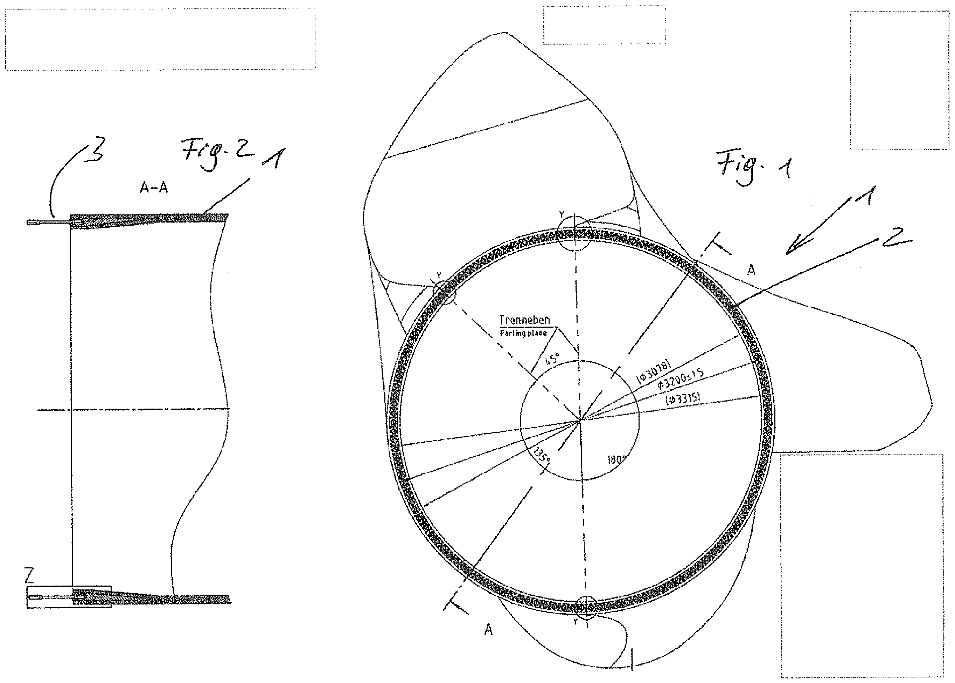

In Figur 1 ist eine Teilansicht eines Rotorblatts 1 eines Windkraftgenerators dargestellt. Das Rotorblatt 1 umfasst einen Befestigungsflansch 2, in den eine Vielzahl von mit Abstand zueinander angeordneten Dehnbolzen 3 als Schraubbolzen im Sinne der Erfindung eingesetzt sind. Die Dehnbolzen 3 sind jeweils in Gewindebohrungen 4 des Befestigungsflansches 2 eingesetzt. Die Gewindebohrungen 4 sind jeweils als Sackbohrungen ausgeführt, wie der Ansicht in Figur 2 zu entnehmen ist. Das Rotorblatt 1 ist mit den Dehnbolzen 3 als Stehbolzen vorgerüstet.

Jeder der Dehnbolzen 3 umfasst einen ersten Gewindeabschnitt 5a und einen zweiten Gewindeabschnitt 5b sowie einen dazwischen angeordneten gewindelosen Dehnabschnitt 5c. Der Dehnabschnitt 5c hat einen kreiszylindrischen Querschnitt. Der Durchmesser des Dehnanschnitt 5c ist kleiner als der Durchmesser der Gewindeabschnitte 5a und 5b.

Das Rotorblatt 1 mit den nach Art von Stehbolzen vormontierten Dehnbolzen 3 wird auf einen dem Durchmesser des Befestigungsflansches 2 entsprechenden Flanschring 6 einer nicht dargestellten Rotornabe aufgesetzt, so dass die Dehnbolzen 3 entsprechende Durchführungen beziehungsweise Bohrungen 7 des Flanschrings 6 durchsetzen. Der Flanschring 6 der Rotornabe wird im Allgemeinen auch als Rotorblattlager-Ring bezeichnet.

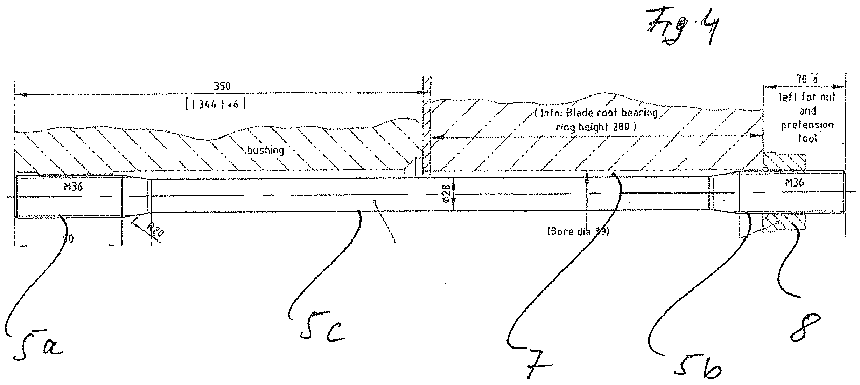

Figur 2 zeigt einen Schnitt durch die Befestigung des Rotorblatts 1 an der Rotornabe, wobei der erste Gewindeabschnitt 5a, der in die Gewindebohrung 4 des Rotorblatts 1 eingesetzt ist, in der Zeichnung gemäß Figur 4 links angeordnet ist. Der Dehnbolzen 3 durchsetzt mit einem Großteil des gewindelosen Dehnabschnitts 5c die Bohrung 7 des Flanschrings 6 und steht mit dem zweiten Gewindeabschnitt auf der von dem Rotorblatt 1 abliegenden Seite des Flanschrings 6 hervor, wo dieser mittels einer Mutter 8 rückseitig gegen den Flanschring 6 verspannt ist.

Auf das freie Ende (in Figur 4 rechts) des Dehnbolzens 3 kann zwecks Feststellung der Länge des Dehnbolzens 3 ein Ultraschallmessgerät aufgesetzt werden, mittels dessen Schallwellen im Ultraschallbereich in Längsrichtung des Dehnbolzens 3 in diesen eingeleitet werden. Das Ultraschallmessgerät kann beispielsweise als sogenannter Transmitter ausgebildet sein, das heißt eine Ultraschall-Quelle und einen Ultraschall-Empfänger aufweisen. Die Ultraschall-Quelle emittiert Schallwellen im Ultraschallbereich, beispielsweise in einem Frequenzbereich etwa über 16 kHz. Diese Schallwellen breiten sich als Longitudinalwellen innerhalb des Dehnbolzens 3 aus und werden an das Ultraschallmessgerät zurückreflektiert. Das Ultraschallmessgerät umfasst einen Ultraschall-Empfänger. Über die Laufzeit der Schallwellen innerhalb des Dehnbolzens 3 ist grundsätzlich die Länge des Dehnbolzens 3 ermittelbar.

Beim Anziehen der Mutter 8 auf dem Gewindeabschnitt 5b des Dehnbolzens wird die Schraubenverbindung beziehungsweise der Dehnbolzen 3 mit einer Vorspannung versehen, die im Material des Dehnbolzens 3, das heißt innerhalb des Dehnabschnitts 5c, vermöge der Elastizität des Materials gespeichert wird. Der Dehnbolzen 3 erfährt dabei im Bereich der elastischen Verformung eine Längenänderung von beispielsweise 0,8 bis 1,2 mm gegenüber der Ausgangslänge im nicht vorgespannten Zustand.

Erfindungsgemäß ist das Ultraschallmessgerät so kalibriert worden, dass eine für gut befundene Messung einer Laufzeit des Ultraschallsignals entspricht, die vorher anhand eines Referenz-Schraubenbolzens unter Vorspannung ermittelt wurde (zweiter Kalibrierungsfaktor). Ist die gemessene Laufzeit des Ultraschallsignals davon abweichend, wird ein Signal erzeugt, das eine nicht für gut befundene Messung signalisiert.

Auf einigen oder allen Dehnbolzen 3 der Schraubenbefestigung des Rotorblatts 1 kann jeweils ein Ultraschalltransmitter als Ultraschallmessgerät angeordnet sein. Ein Auslesen der Messsignale kann in bestimmten Zeitabständen mittels einer entsprechenden Messverkabelung oder auch durch Datenfernübertragung erfolgen.

### Bezugszeichenliste

- 1: Rotorblatt
- 2: Befestigungsflansch
- 3: Dehnbolzen
- 4: Gewindebohrungen
- 5a, 5b: erster und zweiter Gewindeabschnitt
- 5c: Dehnabschnitt
- 6: Flanschring
- 7: Bohrung
- 8: Mutter

## Patentansprüche

1. Verfahren zur Überwachung oder Überprüfung der Schraubbolzen-Vorspannung an Schraubverbindungen an einer Rotornabe eines Windkraftgenerators, wobei die Länge wenigstens eines Schraubbolzens in der Einbaulage unter axialer Vorspannung mittels einer Ultraschallvermessung unter Zuhilfenahme eines Ultraschallmessgeräts erfasst wird und mit einer Solllänge des Schraubbolzens verglichen wird, **dadurch gekennzeichnet, dass** das Ultraschallmessgerät über eine einstellbare Schallgeschwindigkeit eines Ultraschalsignals auf eine Solllänge kalibriert wird, die der Solllänge des Schraubbolzens im vorgespannten Zustand entspricht.

2. Verfahren nach Anspruch 1, **dadurch gekennzeichnet, dass** die Solllänge durch Ultraschallvermessung eines Referenz-Schraubbolzens oder des zu überwachenden Schraubbolzens ermittelt wird.

3. Verfahren nach Anspruch1, **dadurch gekennzeichnet, dass** dieses weiterhin folgende Verfahrensschritte umfasst:
a) Längenmessung der Länge des Referenz-Schraubbolzens oder des betreffenden Schraubbolzens mittels eines Referenzmessmittels, vorzugsweise in Form einer Messlehre, im nicht vorgespannten Zustand,
b) Ultraschallvermessung der Länge des Referenz-Schraubbolzens oder des betreffenden Schraubbolzens in einem nicht vorgespannten Zustand,
c) Ermitteln eines ersten Kalibrierungsfaktors aus den Messungen gemäß den Verfahrensschritten a) und b)
d) Ultraschallvermessung der Länge des Referenz-Schraubbolzens oder des betreffenden Schraubbolzens in einem vorgespannten Zustand und
e) Ermitteln eines zweiten Kalibrierungsfaktors aus den Messungen gemäß Verfahrensschritten b) und c) unter Berücksichtigung des ersten Kalibrierungsfaktors.

4. Verfahren nach Anspruch 3, **dadurch gekennzeichnet, dass** der Referenz-Schraubbolzen oder der betreffende Schraubbolzen nach dem Verfahrensschritt c) und vor dem Verfahrensschritt d) in einer simulierten Einbaukonfiguration vorgespannt wird.

5. Verfahren nach einem der Ansprüche 1 bis 4, **dadurch gekennzeichnet, dass** die Schraubbolzen Dehnbolzen (3) sind, die vorzugsweise als Stehbolzen an einem Rotorflügel vorgesehen sind.

6. Verfahren nach einem der Ansprüche 1 bis 5, **dadurch gekennzeichnet, dass** das Ultraschallmessgerät an den zu überprüfenden oder zu überwachenden Schraubbolzen verbleibt und in vorgegebenen Zeitabständen Messsignale ausgibt.

7. Verfahren nach Anspruch 6, **dadurch gekennzeichnet, dass** die Messsignale per Datenfernübertragung an eine entfernt angeordnete Auswerte- und/oder Anzeigevorrichtung übertragen werden.

## Claims

1. Method for monitoring or checking the bolt pretension at dynamically stressed screwed connections on a rotor hub of a wind turbine, the length of at least one bolt in the installed position under axial pretension being detected by means of an ultrasonic measurement with the aid of an ultrasonic measuring device and compared with a reference length of the bolt, **characterized in that** the ultrasonic measuring device is calibrated via an adjustable speed of sound of an ultrasonic signal to a reference length which corresponds to the reference length of the bolt in the pretensioned state.

2. Method according to Claim 1, **characterized in that** the reference length is determined by means of ultrasonic measurement of a reference bolt or of the bolt to be monitored.

3. Method according to Claim 1, **characterized in that** this also comprises the following method steps:
a) measurement of the length of the reference bolt or of the relevant bolt by means of a reference measuring means, preferably in the form of a measuring gauge, in the non-pretensioned state,
b) ultrasonic measurement of the length of the reference bolt or of the relevant bolt in a non-pretensioned state,
c) determination of a first calibration factor from the measurements according to method steps a) and b),
d) ultrasonic measurement of the length of the reference bolt or of the relevant bolt in a pretensioned state, and
e) determination of a second calibration factor from the measurements according to method steps b) and c) whilst taking the first calibration factor into account.

4. Method according to Claim 3, **characterized in that** the reference bolt or the relevant bolt is pretensioned in a simulated installation configuration following method step c) and before method step d).

5. Method according to one of Claims 1 to 4, **characterized in that** the bolts are stretch bolts (3), which are preferably provided as stud bolts on a rotor blade.

6. Method according to one of Claims 1 to 5, **characterized in that** the ultrasonic measuring device remains on the bolts to be checked or to be monitored and outputs measurement signals at predefined time intervals.

7. Method according to Claim 6, **characterized in that** the measurement signals are transferred by remote data transmission to an evaluation and/or display device arranged at a distance.

## Revendications

1. Procédé de surveillance ou de contrôle de la précontrainte de boulons filetés sur des assemblages par vis au niveau d'un moyeu de rotor d'un générateur éolien, dans lequel la longueur d'au moins un boulon fileté est détectée à la position de montage sous précontrainte axiale au moyen d'une mesure par ultrasons à l'aide d'un appareil de mesure par ultrasons et est comparée à une longueur nominale du boulon fileté, **caractérisé en ce que** l'appareil de mesure par ultrasons est étalonné par l'intermédiaire d'une vitesse acoustique réglable d'un signal ultrasonore à une longueur nominale qui correspond à la longueur nominale du boulon fileté à l'état précontraint.

2. Procédé selon la revendication 1, **caractérisé en ce que** la longueur nominale est déterminée par mesure par ultrasons d'un boulon fileté de référence ou du boulon fileté à surveiller.

3. Procédé selon la revendication 1, **caractérisé en ce qu'**il comprend en outre les étapes de procédé suivantes :
a) mesure de longueur de la longueur du boulon fileté de référence ou du boulon fileté concerné au moyen d'un moyen de mesure de référence, de préférence sous la forme d'une jauge de mesure, à l'état non précontraint,
b) mesure par ultrasons de la longueur du boulon fileté de référence ou du boulon fileté concerné dans un état non précontraint,
c) détermination d'un premier facteur d'étalonnage à partir des mesures conformément aux étapes de procédé a) et b),
d) mesure par ultrasons de la longueur du boulon fileté de référence ou du boulon fileté concerné à l'état précontraint ; et
e) détermination d'un second facteur d'étalonnage à partir des mesures conformément aux étapes de procédé b) et c) en tenant compte du premier facteur d'étalonnage.

4. Procédé selon la revendication 3, **caractérisé en ce que** le boulon fileté de référence ou le boulon fileté concerné est précontraint dans une configuration de montage simulée après l'étape de procédé c) et avant l'étape de procédé d).

5. Procédé selon l'une des revendications 1 à 4, **caractérisé en ce que** les boulons filetés sont des boulons à expansion (3) qui sont de préférence prévus en tant que boulons d'arrêt sur une pale de rotor.

6. Procédé selon l'une des revendications 1 à 5, **caractérisé en ce que** le dispositif de mesure à ultrasons reste sur le boulon fileté à contrôler ou à surveiller et émet des signaux de mesure à des intervalles de temps prédéterminés.

7. Procédé selon la revendication 6, **caractérisé en ce que** les signaux de mesure sont transmis par transmission de données à distance à un dispositif d'évaluation et/ou d'affichage distant.
